## Europäisches Patentamt

## European Patent Office

## Office européen des brevets

(19)

(11) Publication number: **0 207 190 B1**

# EUROPEAN PATENT SPECIFICATION

(12)

(45) Date of publication of patent specification: **02.09.92**　(51) Int. Cl.⁵: **G02C  5/22**, G02C 5/16, G02C 5/20

(21) Application number: **85112280.4**

(22) Date of filing: **27.09.85**

(54) Stem device for eyeglasses frames and the like.

(30) Priority: **05.07.85 IT 8253485**

(43) Date of publication of application:
**07.01.87 Bulletin  87/02**

(45) Publication of the grant of the patent:
**02.09.92 Bulletin  92/36**

(84) Designated Contracting States:
**CH DE FR LI**

(56) References cited:
**EP-A- 0 003 928**　　**EP-A- 0 091 573**
**EP-A- 0 096 928**　　**EP-A- 0 115 826**
**FR-A- 2 519 434**　　**US-A- 4 005 930**
**US-A- 4 494 834**

(73) Proprietor: **Sartor, Rino**
**Via Trevignano 9**
**I-31044 Montebelluna (Treviso)(IT)**

Proprietor: **Pivetta, Innocente**
**Via Bernardi 4**
**I-31049 Valdobbiadene (Treviso)(IT)**

(72) Inventor: **Sartor, Rino**
**Via Trevignano 9**
**I-31044 Montebelluna (Prov. Treviso)(IT)**

(74) Representative: **Modiano, Guido et al**
**MODIANO, JOSIF, PISANTY & STAUB**
**Modiano & Associati Via Meravigli, 16**
**I-20123 Milano(IT)**

EP 0 207 190 B1

## Description

This invention relates to a temple device for eyeglass frames and the like.

Currently known are eyeglass frames which have a temple, or stem or leg, associated with a hinge attached to a front piece which houses lenses, wherein the temple is positioned, in normal use, at a smaller angle than 90° with respect to the front piece.

Thus, the temples are made to lie close against the user's temples for holding the eyeglasses at an optimum position even in the event of jerky movements of the head.

Also known nowadays are eyeglass frames which incorporate hinges, adapted for providing elastic over-center spreading and snap-closing features.

A drawback of such prior frames is the disturbing action of the pressure exerted by the temples on the user's temples for holding the eyeglasses in position.

Such prior frame types also have disadvantages that due to their complex construction, they are consequently vulnerable to jamming due to their complex operation, and to wear occuring in relatively movable and contacting parts.

EP-A-0003928 shows an elastic hinge for mounting on spectacles in which an element with a pivot hole is connected to a threaded stem inserted into a casing which is connectable to a temple. A washer, spring, and screw nut assembly is provided for elastically loading the stem.

It is a primary aim of this invention to obviate such drawbacks affecting prior types, by providing a stem device which enables eyeglasses to be held close in correct position on the head of a person without exerting pressure on the user's temples or causing any inconvenience.

Within the above aim, it is a further important object of the invention to provide a temple device which allows the temple or leg to be opened beyond its position of normal use, and a snap-action return movement of the same to its position of normal use.

This aim, the cited object and other objects which will become apparent hereinafter are achieved by a temple device for eyeglass frames and the like, as defined in the claims.

Further features and advantages of the invention will be apparent from the following detailed description of some preferred, but not exclusive, embodiments of this temple device, with reference to the accompanying illustrative and not limitative drawings, where:

Figure 1 is a three-quarter perspective view of the temple device according to a preferred embodiment of the invention;

Figure 2 is a side view thereof;

Figure 3 is a partly sectional plan view taken along the line III-III of Figure 2;

Figure 4 is a partly sectional plan view showing another embodiment of the temple device according to the invention;

Figure 5 is a lateral view of the temple device of Figure 4;

Figure 6 is a fragmentary sectional view of a further embodiment of the temple device according to the invention;

Figures 7 and 8 are partly sectional front and three-quarter perspective detail views respectively, of means for allowing axial rotation in the temple device of Figure 6;

Figure 9 is a fragmentary sectional view, showing a portion of a further embodiment of the temple device;

Figures 10 and 11 are partly sectional front and perspective detail views respectively showing rotation means of the temple device of Figure 9;

Figure 12 is a fragmentary perspective view showing a further embodiment of the temple device;

Figure 13 is a partly sectional plan view similar to the view of Figure 3, showing another embodiment of the temple device according to the invention;

Figure 14 is a sectional view taken along the line XIV-XIV of Figure 13;

Figure 15 is a sectional view taken along the line XV-XV of Figure 13;

Figure 16 is a sectional view taken along the line XVI-XVI of Figure 13;

Figure 17 is a three-quarter perspective view of yet another embodiment of the temple device according to the invention;

Figure 18 is an exploded perspective view showing the components of the temple device of Figure 17;

Figure 19 is a sectional view taken along the line XIX-XIX of Figure 17;

Figure 20 is a sectional view taken along the line XX-XX of Figure 19;

Figure 21 is a sectional view taken along the line XXI-XXI of Figure 19;

Figure 22 is an exploded three-quarter perspective view of a further embodiment of the temple device according to the invention;

Figure 23 is a longitudinal sectional view of the temple device;

Figure 24 is a transverse sectional view taken along the line XXIV-XXIV of Figure 23;

Figure 25 is a schematic view illustrating the operation of the inventive temple device; and

Figure 26 is a longitudinal sectional view illustrating the operation of the embodiment shown in Figure 17 to achieve an overcenter spreading movement.

With reference to the cited drawing figures, the temple device particularly for eyeglasses frames, comprises a body 2 having a portion defining a substantially cylindrical shape with a cavity 3 at one of its ends, the other end, indicated at 4, being arcuately shaped for location rearward of the ear auricle of a user.

Externally of the body 2, and lying substantially concentrically thereto, there is provided, at the end formed with the cavity 3, a tubular element 5 which merges at one end with the peripheral edge of the body 2 and at the other with a cam or hinge 6 rigid with the front piece 7 of eyeglasses.

At the blind end of the cavity 3, there is formed a seat 8 for locking, guide, and return means 9 composed of a small peg having a concave side surface at the cavity 3, that peg having a head 10 of essentially parallelepipedal shape protruding from the seat 8 at an opening 11, having slightly greater width and length dimensions than the corresponding length and width dimensions of the head 10 of the peg 9 and being formed at the side surface of the tubular element 5.

That opening has an inclined longitudinal axis with respect to the longitudinal axis of the body 2 and the tubular element 5, the intersection of the head 10 of the peg with the edges of the opening 11 guiding, once a rotation has been imparted to the body 2, the axial displacement of the same.

The tubular element 5 is further formed internally with a step-like abutment 12 adapted to limit the axial travel of the end of the body 2 contained therein.

Inside the cavity 3 and the element 5, means 13 are accommodated which afford elastic return between the same once an axial rotation has been applied, such means comprising two balls 14 and 15 interacting respectively with the lateral surface of the peg and a cam 16 comprising the hinge 6.

Between said balls 14 and 15, an elastic means intervenes which is formed of a cylindrical coil compression spring 17 which forces the ball 89 towards the matingly shaped lateral surface of the peg 10, and the other ball 15 towards the cam 16.

The temple device 1 is assembled by successively fitting into the tubular element 5 associated with the hinge 6 the ball 15, spring 17 and ball 14; thereafter, the end of the body 2 will be introduced at the end formed with the cavity 3.

After aligning the opening of the seat 8 with the opening 11, one may then introduce the peg 9 which is locked within the seat by the action of the spring 13 causing the ball 14 to engage therewith, the head 10 of the peg 9 thereby holding the body 2 and element 5 in mutual association.

A twisting effect of the end 4 of the body 2 relatively to the tubular element 5 occurs by virtue of the axial thrust of the spring 17 which acts on the ball 14 which in turn transfers the force to the peg 9, causing the same to slide along the oblique opening 11 untill it comes to rest by being pushed against the end thereof which is most distant from the ball 15.

By moving said end 4 rotatively in the direction of the arrow A (Figure 2) the head 10 of the peg slides downwardly along the oblique opening 11 and hence nearer to the ball 15, the lateral surface of the peg pushing the ball 14 towards the ball 15 and resultantly compressing the spring 17.

That position being one of unstable equilibrium, on releasing the end 4 of the stem, the head 10 of the peg 9 will slide along the oblique slot and return to the position shown in Figure 2, thereby repositioning the end to its original position by causing it to rotate about the longitudinal axis of the sum with respect to the tubular element 5.

The spring 17 cooperating with the ball 15, also permits elastic overcenter spreading and snap-closing of the temple device 1 is achieved, the former being limited by the presence of an abutment element 18 formed, for example, of a cylindrical pin placed inside the spring 17, the latter by the configuration of the cam 16 cooperating with the ball 15.

It has thus been shown how the invention achieves its aim and objects, it being possible to obtain an axial rotation, with elastic return with respect to the tubular element associated with the hinge 6, it being possible for the end 4 to have at rest an inclination such as to ensure close fitting of the legs or stems of eyeglasses against a person's head without causing any inconvenience thereto.

The use of the means 13 in conjunction with the cam 16 further allow a temple device to be obtained which effects the elastic overcenter spreading and snap-closing with respect to the front piece 7.

A further advantage achievable by the invention resides in the fact that a temple device is provided which, while satisfying all the previously described characteristics, is of very compact size.

Of course, the invention is susceptible to many modifications and changes without departing from the scope of the same inventive concept.

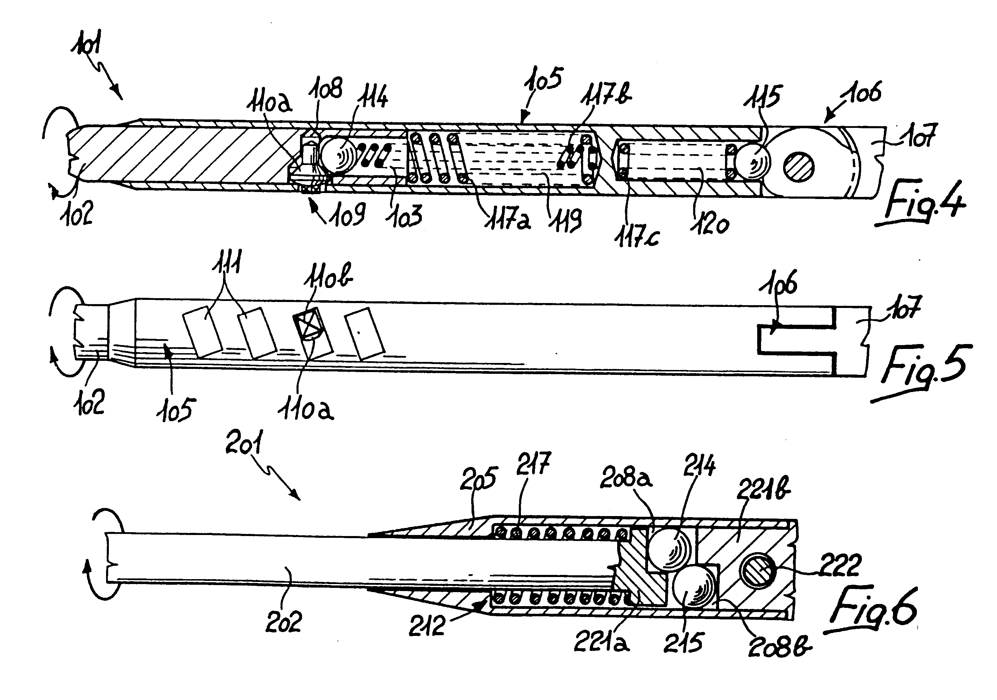

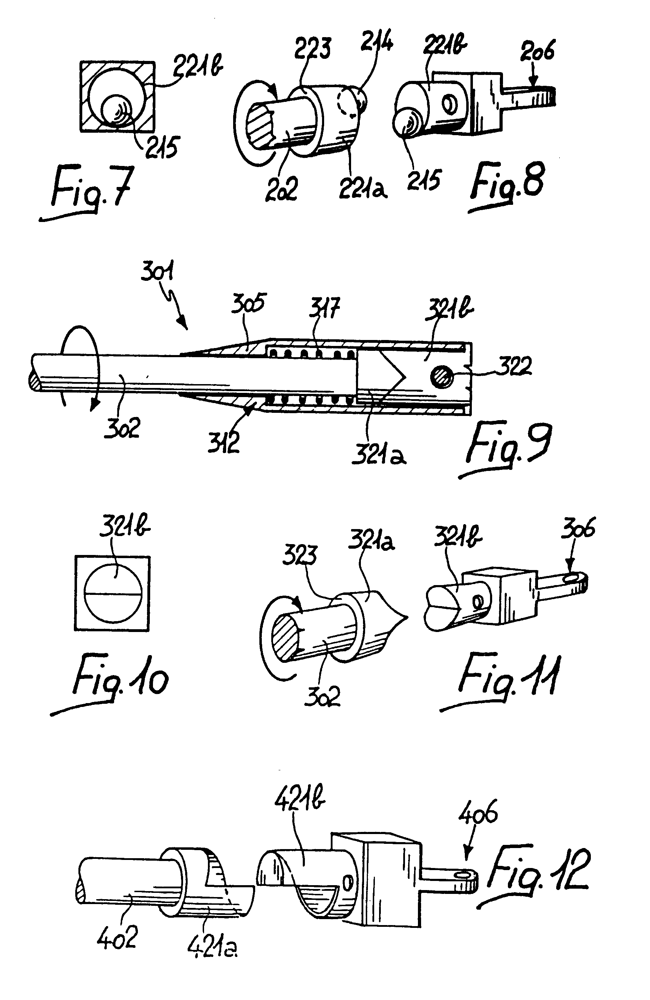

Thus, as an example, in Figures 4 and 5, there is shown another embodiment of the temple device 101 having a body 102 of essentially cylindrical shape, formed at one end with a cavity 103, that body being inserted, in correspondence with the latter, into a tubular concentric element 105 which is slidable axially relatively to the body 102 and associated with one end with a hinge 106 rigid with the front piece 107.

At the closed end of the cavity 103, the element 102 has a seat 108 for a locking, guide end return means 109 comprising a small peg having one end 110a with a larger diameter than the width of an opening 111 formed in the lateral surface of the element 105 and inclined with respect to the longitudinal axis of the same; that peg has, protruding with respect to the end 110a, a head 110b of essentially parallelepipedal shape, and having smaller dimensions than the width end length of the openings 111.

The longitudinal extension of the peg is, moreover, shorter than the corresponding extension of the seat 108, the seat 108 allowing the whole peg to be removably accommodated therein.

The element 105 has a first cavity 119 in communication with the cavity 103 and a second cavity 120, not in communication with the first, also axial and confronting the hinge 106.

Inside the cavity 119, there is accommodated a first left-handed coil spring whose ends rest on the blind end of the cavity 119 and the peripheral edges of the end of the body 102.

Coaxially with the spring 117a there is placed inside a second right-hated coil spring 117b whose ends interact with the closed ends of the cavity 119 and the surface of a ball 114 interacting with the lateral surface of the peg.

Within the cavity 120, there is instead a spring 117c cooperating with a ball 115 in turn interacting with the cam 106.

Also in this variation, the twisting effect occurs under the thrusts of the two springs 117a and 117b, the former urging the body 102 directly, and the latter urging the ball 114 and peg.

In the element 105 there are formed, parallel to one another, several openings 111, which afford an extensible leg.

The means 109 is in fact fully insertable into the seat 108, this allowing, by virtue of the presence of the spring 117a, its head 110b to be positioned at the selected opening 111.

The shape of the end 110a will prevent the peg itself from coming out of its seat, the use of two separate springs (right- and left-handed in order that they can slide relatively to each other) enabling the user to impart a weaker force to the head 110a of the peg to change the length of the leg 101.

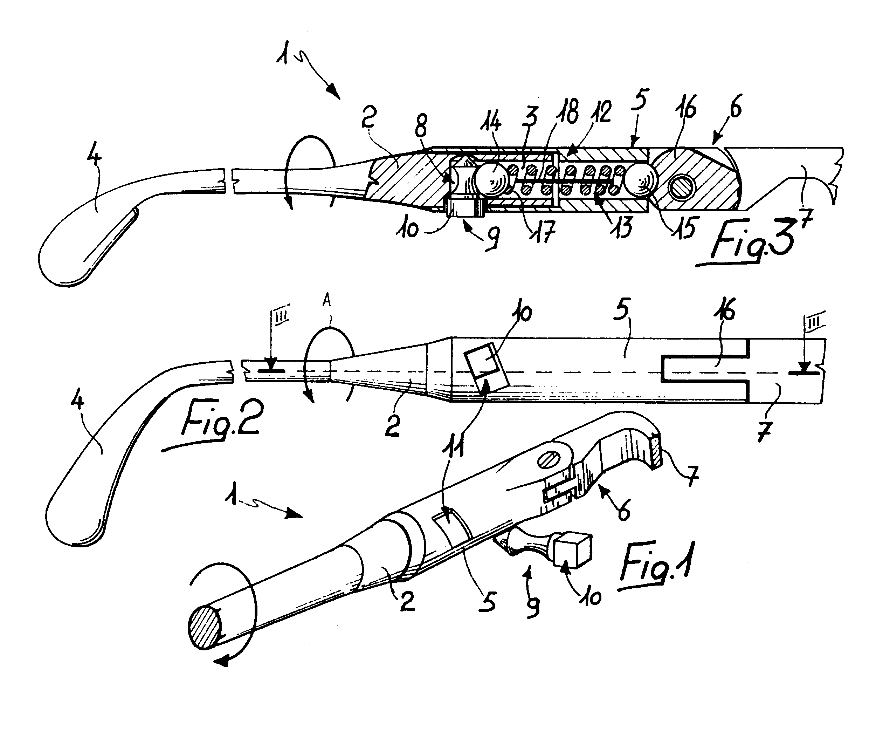

Accomplishment of the elastic overcenter spreading and snap-closing is similar to what has been described for the embodiment illustrated in Figures 1 to 3, the presence of the spring 117c allowing an independent action of the axial rotation which may be imparted to the body 102.

In Figures 6,7 and 8, there is shown a variation of a temple device 201 comprising a substantially cylindrical body 202 which has one end 221a, having the same shape but a slightly greater diameter, inserted into a tubular element 205, the latter being associated at one end, through a set screw 222, with the end 221b, identical to the end 221a, of a hinge 206.

The element 205 has inwardly, at the opposed end from that associated with the 221b, a step-like discontinuity 212, between the latter and the flat annular base 223 of the end 221a there being interposed a helical coil spring 217.

At the confronting surfaces of the ends 221a and 221b there are secured, in pre-arranged seats 208a and 208b, two balls 214 and 215.

The latter are put in contact with each other owing to the presence of the spring 217, imparting a rotation to the body 202 the ball 214 which slides on the ball 215 imposes then an axial translation on the body 202, the spring 217 being compressed.

On releasing the body 202 re-positioning to the original condition will be ensured by the force applied by the spring 217 to the ball 214. Of course, the balls may be provided in any numbers, depending on requirements.

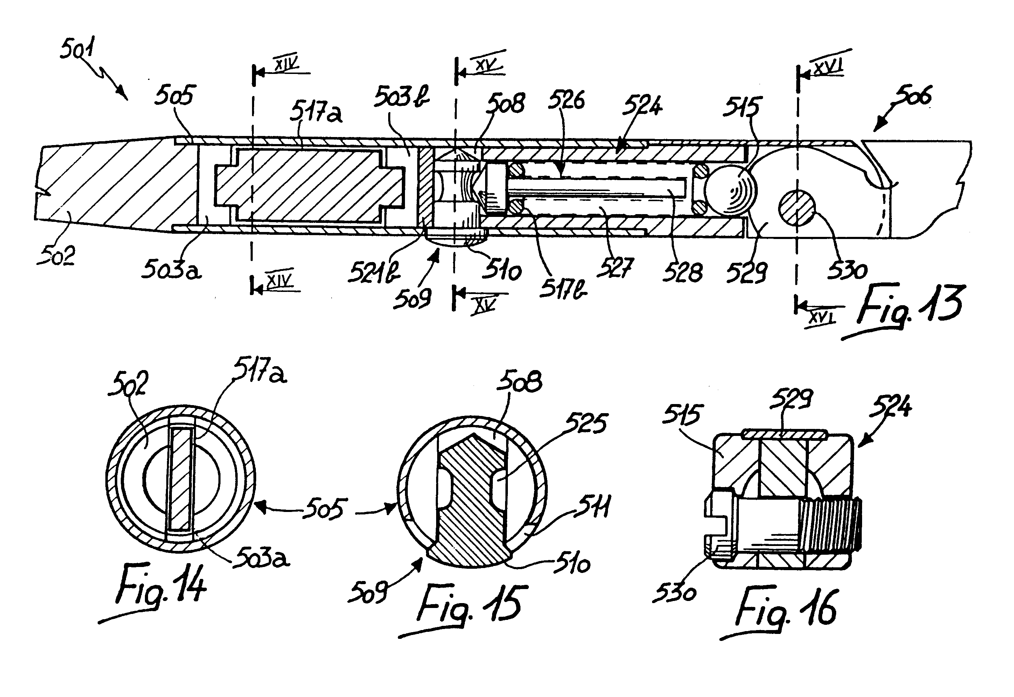

In Figures 9,10 and 11, there is shown another embodiment of a temple device 301, comprising an essentially cylindrical body 302 which has an end 321a, having a slightly larger diameter, placed within a tubular element 305 associable with one end, through a set screw 322, at the 321b of a hinge 306.

Also in this case, the tubular element 305 has a step-like discontinuity 312, between the latter and the flat annular base 323 of the end 321a there intervening a helical coil spring 317.

The confronting surfaces of the end 321a and 321b are matingly shaped to each other, the former having the shape of a male V-like wedge, the latter of a female wedge.

The particular V-like shape enables the side thrusts and hence the negative moments to be eliminated.

In Figure 12 there is shown a further embodiment of a temple device the body 402 whereof has a terminating end 421a which interacts with a matingly shaped end 421b of a hinge 406.

The confronting surfaces of that end have an involute profile which permits of a 360-degree mutual rotation.

That profile could, of course, be a double involute design in order to allow a maximum rotation of 180°.

In Figures 13,14,15 and 16 there is shown yet another embodiment of a temple device 501 comprising a body 502 which has a cylindrical end to which a tubular element 505 is externally attached, at said end the body 502 having a diametrical cavity 503a, the seat for the end of a steel blade or torsion-machined coil spring 517a, its other end being inserted into a diametrical cavity 503b, identical to the diametrical cavity 503a, formed at the end 521b of the body 524c associated with the hinge 506.

Rearwardly of the cavity 503b there is formed a seat 508 for a locking means, guide and return means 509 comprising a peg having an outward protruding head 510 from an opening 511 formed in the lateral surface of the element 505, that peg also having the function of a torsional travel limiter for the element 505 relatively to the body 524.

The peg's lateral surface has an annular groove 525, the seat for the end of a pin 526 accommodated within the longitudinal cavity 527 in communication with the seat 508, that end being held partway within the groove by the interposition between it and a ball 515, cooperating with a cam of the hinge 506, of a cylindrical helical coil spring 517b by compression.

The pin 526 has a cylindrical rod or shank 528 of such length as to permit the end-of-travel of the ball 515 cooperating with the cam 529 of the elastic hinge 506.

The position of the cam is fixed with respect to the body 524 by the interposition of a screw 530.

In this solution the means 509 provides the anchoring between the body 502 and tubular element 505 limiting the rotation of the latter relatively to the body 524.

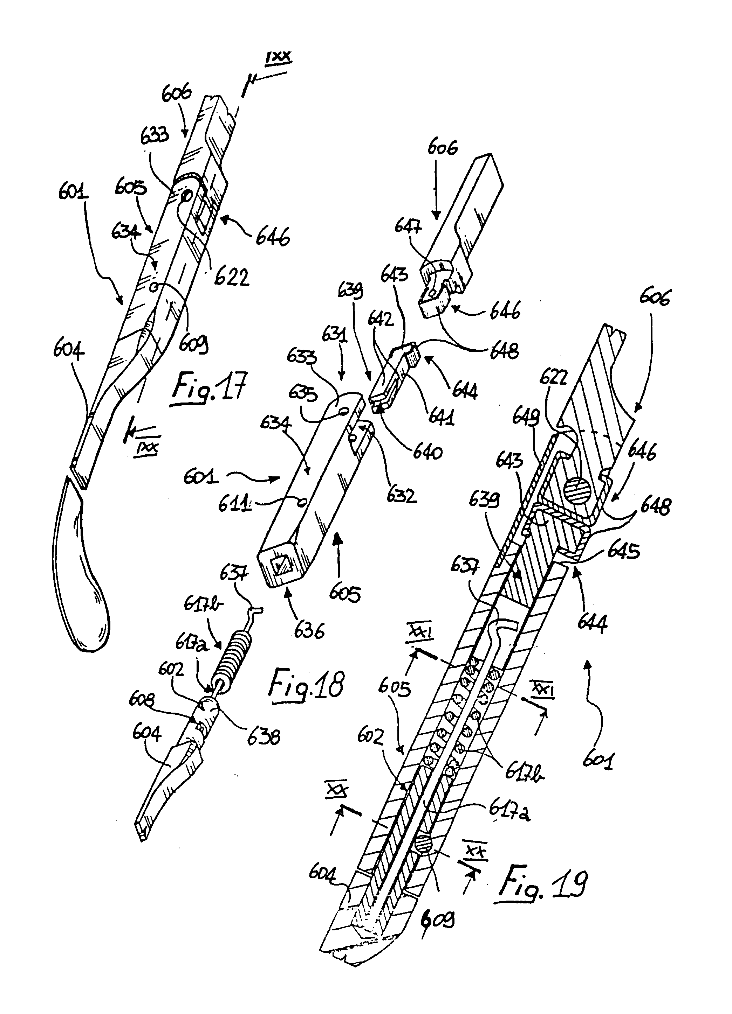

In Figures 17,18,19,20,21 and 26 there is illustrated a further embodiment of a temple device 601 comprising a tubular element 605 which may expediently be of metal, having a parallelepipedal shape preferably with a substantially square or rectangular cross-section, which has in the forward area 631 a longitudinal milling 632 defining two substantially identical wings 633 slightly bevelled on the front.

On the surface 634 of the element 605, at the mid-longitudinal axis and affecting the wings 633, there is formed a through hole 635 along a perpendicular axis.

A similar hole 611 is formed, again in the surface 634 but proximate the other end 636 and slightly deviated from the mid-longitudinal axis.

The tubular element 605 defines moreover, the seat for a hollow body 602 forming a rotating pin, insertable from the end 636, having a shorter length and a slightly smaller diameter than the internal side of the element 605.

With that body 602, made hollow inside, there is rigid, on one side, a leg 604 whose end merges with the end 636 and, on the same side, with an elastic torque means 617a comprising a wire.

The latter has the same longitudinal axis as the body 602, comes out of it, and ends with a half-eye 637 the maximum bulk whereof is somewhat less than the internal side of the element 605 and the diameter whereof is much smaller than that of the body 602 itself; the length of the wire is such that the half-eye 637 does not protrude from the element 605 once the body 602 is inserted thereinto.

On the lateral surface 638 of the body 602 there is formed a milling on a plane extending substantially perpendicular to its longitudinal axis defining a seat 608, that seat being formed at the hole 611 provided in the element 605, both of them forming a housing for a small peg 609 adapted to prevent mutual displacement between the element 605 and the body 602 and also to limit the rotation of the latter.

The tubular element 605 is also the seat for a matingly shaped slide 639 insertable from the forward area 631, that slide having a milling 640 made perpendicularly to its longitudinal axis to a depth and width suitable to accommodate the half-eye 637 without the latter interacting with the step 641 formed at the end of the same but only with the two wings 642.

The end 643 of the slide 639 is cam-shaped, with a substantially parallelepipedal shape and has a side projection 644 which interacts with the step 645 formed at the base of the milling 632.

Between the body 620 and the wings 642 of the slide 639 there is a cylindrical coil compression spring 617b, of such a diameter as to be contained in the element 605 and not to interact with the elastic means 617a.

The end 643 of the hinge 601 is coupled with a cam 646 having the same bulk and dimensions but with a hole 647 with a perpendicular axis to the longitudinal one formed in the hinge element 606 rigid with the front piece of a frame, the hinges 601 and 606 being associated by interposing a screw 622 inserted through the holes 635 and 647.

Both cams 643 and 646 are partly covered by a wear-preventing sheet 648 while, on the opposed side to that having the projection 644, there may be placed, laterally to the element 605 and at the forward area 632, an aesthetic decoration 649.

The operation will be now illustrated: the means 617a is inserted into the element 605 to position the half-eye 637 between the wings 642; this means imposing on it a torque, it being, at rest, in a perpendicular position to this.

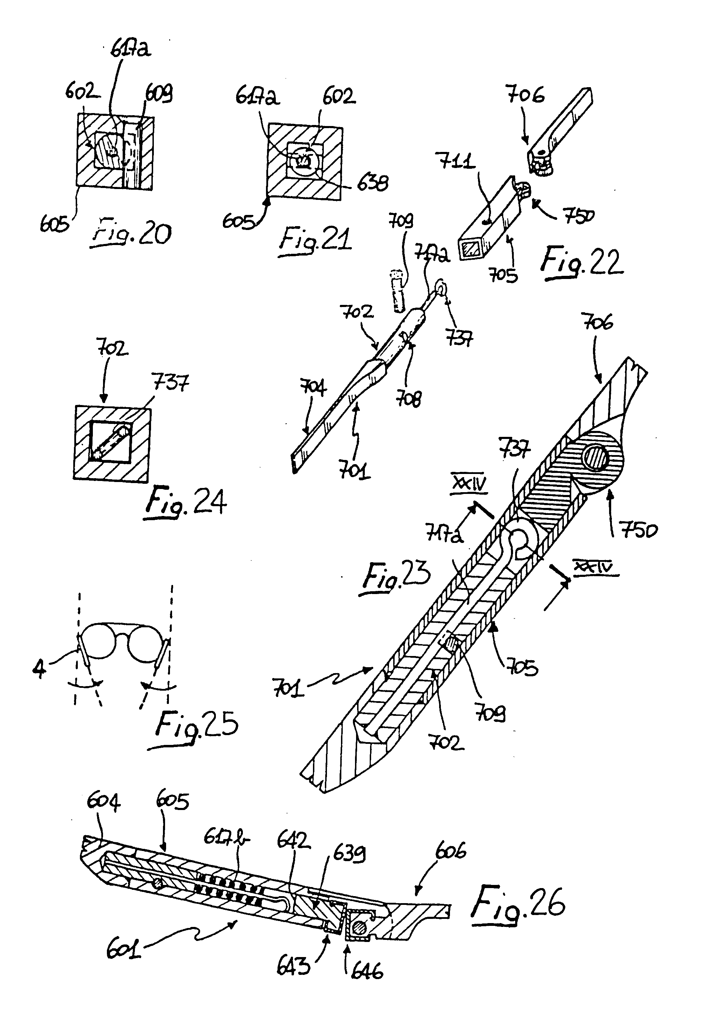

That torque causes, as shown in Figure 26, the leg ends placed behind the ears of the wearer of the eyeglasses, to be applied a moment which bring them to gently press onto the head, preventing incidental loss of the eyeglasses without creating inconvenience or disturbance due to pressures exerted on the temples of the wearer of the eyeglasses by the stems themselves.

The rotation of the latter is facilitated by the shape of the body 602, the peg 609 in conjunction with the seat 608 restricting the rotation, preventing any loss of the wire forming the means 617a and at the same time preventing the leg 604 from slipping out of the element 605.

The overcenter spread condition is shown in Figure 26: on the cam 646 there rests the cam 643, thereby by acting on the stem one forces the slide 639 to translate; the latter compresses, with the bases of the wings 642, the spring 617b which tends therefore to restore the cam 643 to a condition of stable equilibrium with respect to the cam 646.

On closing, the same operation takes place while the snap-action is imparted by the shape of the cam 646 which affords a second position of stable equilibrium with the cam 643, which position is perpendicular to that of normal opening.

In Figures 22,23 and 24 there is shown a further embodiment of a temple device 701 according to the invention, wherein, for simplicity, only the aspect of the twisting action imparted to the leg 704 has been considered.

In this case we still have a tubular element 705, the seat for a hollow body 702 having the function of a pivot, with which are made rigid on the one side the leg 704 and on the other an elastic torque means 717a comprising a wire ending in an eye 737 whose diameter is slightly smaller than the internal diagonal of the element 705.

In this different form, one can put, and lock, under torque the element 717a, that torque being in any case limited by the peg 709 in conjunction with the seat 708, the hinge 701 being associated through an eyed head 750 with a matingly shaped hinge 706 rigid with the front piece of a frame.

Of course, all the details may be replaced with other technically equivalent elements, and the materials may be any selected ones to meet individual requirements.

## Claims

1. A temple device for eyeglasses comprising: a rearward body (2;102;202;302;502;602;702) extending along a predetermined longitudinal axis and having a first end to which is connected an arcuately shaped portion of the temple device for location behind a user's ear and having a second end opposite to said first end thereof; a frontward tubular element (5;105;205;305;605;705) extending along said longitudinal axis and having a first end connected to a hinge element (6;106;206;306;406;506;606;706) for connection to a front portion of the eyeglasses and having a second end opposite to said first end thereof, said temple device being characterized in that said second end of said body is rotatably connected concentrically to said second end of said tubular element in such a way that said body is rotatable about said longitudinal axis with respect to said tubular element, said temple device further comprising elastic biasing return means (17;117;217;317;517;617;717) interconnected between said second end of said body and said second end of said tubular element for biasing said body, in the absence of contrary moment forces, into a preset rest position with respect to said tubular element, said temple device further comprising means (9-12;109-111;214,215;321a,321b;421a,421b; 508-511;608-611;708-711) for limiting axial translation and axial rotation of said body with respect to said tubular element.

2. Temple device according to claim 1, characterized in that said second end of said body (2) is provided with a cylindrical cavity (3) open towards said tubular element (5) and with a seat (8) which is perpendicular to said longitudinal axis, said second end of said tubular element (5) merging over said second end of said body (2) and being provided with an opening (11) arranged in line with said seat (8), said opening (11) being essentially parallelepipedal and having a longitudinally extending axis which is slightly inclined with respect to a perpendicular of said longitudinal axis of said temple device, said means for limiting axial translation and axial rotation comprising a peg (9) which has an essentially parallelepipedal shaped head (10) having a width and length slightly smaller than said opening (11), said peg (9) being inserted through said opening (11) into said seat (8) such that said head (10) of said peg (9) is engaged and is slidably guided in said opening (11) upon a relative rotation of said body (2) with respect to said tubular element (5), and further a step like abutment (12) being provided inside said tubular element (5) for stopping engagement with said second end of said body (2), said peg (9) having a concave side surface which is arranged inside said cavity (3) of said second end of said body (2), said hinge (6) defining a cam (16) which is pivoted to said first end of said tubular element (5), said elastic biasing return means comprising a cylindrical compression coil spring (17) extending along said longitudinal axis partially inside said cylindrical cavity (3) and partially inside said tubular element (5), and a first ball (14) and a second ball (15) are provided, said first ball (14) being arranged inside said cavity (3) and interacting between a first end of said spring (17) and said concave side surface of said peg (9), said second ball (15) being arranged in said tubular element (5) and interacting between a second end of said spring (17) and a curved cam surface defined on said cam (16), and finally in order to permit elastic over-

center spreading said temple device further comprising an abutment element which is constituted by a cylindrical pin (18) arranged inside said spring (17).

3. Temple device according to claim 1, characterized in that said second end of said body (102) is provided with a cylindrical cavity (103) open towards said tubular element (105) and with a seat (108) which is perpendicular to said longitudinal axis, said second end of said tubular element (105) merging over said second end of said body (102) and being provided with a plurality of openings (111) one of which is arranged in line with said seat (108), each said opening (111) being essentially parallelepipedal and having a longitudinally extending axis which is slightly inclined with respect to a perpendicular of said longitudinal axis of said temple device, said means for limiting axial translation and axial rotation comprising a peg (109) which has an end (110a) having a diameter larger than a width of said openings (111) and a head (110b) protruding from said end (110a) which has an essentially parallelepipedal shape having a width and length slightly smaller than said openings (111), said peg (109) being inserted into said seat (108) such that said end (110a) is arranged inside said tubular element (105) and said head (110b) is engaged and is slidably guided in said one of said openings (111) upon a relative rotation of said body (102) with respect to said tubular element (105), said peg (109) having a length which is smaller than a corresponding length of said seat (108) thereby allowing, upon pushing said peg (109) fully into said seat (108), for repositioning of said peg (109) in a desired one of said openings (111), said tubular element (105) being provided with a first cavity (119) in communication with said cavity (103) of said second end of said body (102) and a second cavity (120) open towards said hinge (106) and closed oppositely thereto, said hinge (106) defining a cam which is pivoted to said first end of said tubular element (105), a spring (117c) being provided in said second cavity (120) which interacts between the closed end of said second cavity (120) and a first ball (115) arranged at a curved cam surface defined on said cam, said elastic biasing return means comprising a first left-handed coil spring (117a) which extends along said longitudinal axis inside said tubular element (105) and which interacts between said second end of said body (102) and a closed end of said second cavity (120), a second right-handed coil spring (117b) which extends along said longitudinal axis partially inside said cavity (103) and partially inside said tubular element, said second coil spring (117b) being arranged coaxially to and inside said first coil spring (117a), and a second ball (114) being provided, said second ball (114) being arranged inside said cavity (103) and interacting between a first end of said second coil spring (117b) and said peg (109), said second coil spring (117b) having a second end which rests against said closed end of said second cavity (120).

4. Temple device according to claim 1, characterized in that said second end (221a) of said body (202) has a similar shape but larger diameter than said body (202), said second end (221a) being inserted in said tubular element (205) whose said first end is connected, by means of a set screw (222), to an end (221b) of said hinge (206), said second end (221a) of said body (202) defining a flat annular base (223) facing away from said hinge (206), said tubular element (205) defining a step like discontinuity (212) facing towards said hinge (206), said elastic biasing return means comprising a helical coil spring (217) being arranged around said body (202) and inside said tubular element (205), and said coil spring (217) interacting between said flat annular base (223) and said step like discontinuity (212), said means for limiting axial translation and axial rotation comprising at least two balls (214,215) being oppositely arranged in seats (208a,208b) provided in confronting surfaces defined on said second end (221a) of said body (202) and said end (221b) of said hinge (206) thereby said balls being spring-loaded by said spring (217), said balls (214,215) being in half-contact during a full extension of said coil spring (217) and a rotation of said body (202) causes a full-contact of said balls (214,215) to thereby compress said spring (217).

5. Temple device according to claim 1, characterized in that said second end (321a) of said body (302) has a similar shape but larger diameter than said body (302), said second end (321a) being inserted in said tubular element (305) whose said first end is connected, by means of a set screw (322), to an end (321b) of said hinge (306), said second end (321a) of said body (302) defining a flat annular base (323) facing away from said hinge (306), said tubular element (305) defining a step like discontinuity (312) facing towards said hinge (306), said elastic biasing return means comprising a helical coil spring (317) being arranged around said body (302) and inside said tubular element (305), and said coil spring (317) interacting between said flat annular base (323) and said step like discontinuity (312), said means for limiting axial translation and axial rotation comprising a female wedge V-like wedge defined on said end (321b) of said hinge (306) and facing away from said hinge (306), and a male V-like wedge defined on said second end (321a) of said body and facing towards said hinge (306) thereby said female wedge and said male wedge being spring-loaded into mutual engagement contact by said coil spring (317).

6. Temple device according to claim 1, characterized in that said second end (421a) of said body (402) has a similar shape but larger diameter than said body, said second end (421a) being inserted in said tubular element whose said first end is connected, by means of a set screw, to an end of said hinge (406), said second end (421a) of said body defining a flat annular base facing away from said hinge (406), said tubular element defining a step like discontinuity facing towards said hinge (406), said elastic biasing return means comprising a helical coil spring being arranged around said body and inside said tubular element, and said coil spring interacting between said flat annular base and said step like discontinuity, said means for limiting axial translation and axial rotation comprising an involute profile defined on said end (421b) of said hinge (406) and facing away from said hinge (406), and a corresponding involute profile defined on said second end (421a) of said body and facing towards said hinge (406) thereby said involute profiles being spring-loaded into mutual engagement contact by said coil spring.

7. Temple device according to claim 1, characterized in that said second end of said body (502) is provided with a diametrical cavity (503a) open towards said tubular body (505), said second end of said tubular element (505) merging over said second end of said body (502) and being provided with a cavity (503b) which is identical to said diametrical cavity (503a), said elastic biasing return means comprising a steel blade (517a) arranged inside said tubular element (505) between said diametrical cavity (503a) of said second end of said body (502) and said cavity (503b) of said tubular element (505), said tubular body (505) being further provided, arranged towards said hinge (506) with respect to said cavity (503b), with a seat (508) which is perpendicular to said longitudinal axis and with a longitudinal cavity (527) in communication with said seat (508), said tubular element (505) being provided with an opening (511) arranged in line with said seat (508), said means for limiting axial translation and axial rotation comprising a peg (509) which is inserted into said seat (508) and which has an outward protruding head (510) from said opening (511) , said peg (509) having an annular groove (525) which acts as a seat for a pointed end of a pin (526) accommodated within said longitudinal cavity (527), said pointed end of said pin (526) being held partway within said groove by a cylindrical helical coil spring (517b) arranged around said pin (526), said spring (517b) being in contact at an end opposite to said pointed end of said pin (526) with a ball (515) which cooperates with a curved cam surface (529) defined on said hinge (506).

8. Temple device according to claim 1, characterized in that said tubular element (605) has a parallelepipedal shape with a substantially square or rectangular cross section, said first end (631) of said tubular element (605) having a longitudinal milling (632) which defines two substantially identical wings (633) slightly bevelled towards said hinge (606), said wings (633) being provided with holes (635) along an axis perpendicular to said longitudinal axis, a matingly shaped slide (639) being inserted between said wings (633), said slide (639) having a first end which is a cam end (643) with a substantially parallelepipedal shape defining a side projection (644) which interacts with an inner step (645) defined at a base of said milling (632), said first cam end (643) being arranged on the opposite side of said holes (635) of said wings (633) with respect to said hinge (606) which has a cam end (646) interacting with said cam (643) and defining a hole (647) for pivoting said cam end (646) to said wings (633) by means of a pin (622) inserted through said hole (647) and said holes (635), said slide (639) having a second end with a milling (640) defined perpendicularly to said longitudinal axis, said body defining a rotating pin (602) which is insertable into a seat defined in the second end (636) of said tubular element, said elastic biasing return means comprising a spring-loaded wire (617a) projecting from said rotating pin (602) into said tubular element (605), said wire (617a) having a half-eye end (637) which is inserted in said milling (640) of said slide (639), said means for limiting axial translation and axial rotation comprising a peg (609) inserted in a hole (611) provided at a slightly deviated position from said longitudinal axis in said second end (636) of said tubular element (605), said peg (609) further being accommodated in a seat (608) defined on a lateral surface (638) of said rotating pin (602), a cylindrical coil compression spring (617b) being furthermore provided around said wire (617a) between said rotating pin (602) and said second end with said milling (640) of said slide (639).

9. Temple device according to claim 1, characterized in that said second end of said body defines a cylindrical pivot (702) inserted longitudinally into a seat with a substantially parallelepipedal cross section of said tubular element (705), said elastic biasing return means comprising a spring-loaded wire (717a) protruding from said cylindrical pivot (702) into said seat of said tubular element (705) and ending in an eye (737) having a diameter slightly smaller that an internal diagonal of said seat of said tubular element (705) so as to fit therein, said means for limiting axial translation and axial rotation of said pivot (702) with respect to said tubular element (705) comprising a peg (709) accommodated through a hole (711) provided off-center in said tubular element (705) and accommodated in a seat (708) provided on a lateral surface of said pivot (702), said first end of said tubular element (705) being provided with an eyed-head (750) pivotally connected to said hinge element (706).

**Patentansprüche**

1. Brillenbügelvorrichtung für Brillen, umfassend: Einen rückwärtigen Körper (2; 102; 202; 302; 502; 602; 702), der sich entlang einer vorbestimmten Längsachse erstreckt mit einem ersten Ende, an dem ein bogenförmiger Teil der Brillenbügelvorrichtung zur Positionierung hinter dem Ohr des Benutzers angeordnet ist, und mit einem dem ersten Ende entgegengesetzten zweiten Ende; ein frontseitiges, röhrenartiges Element (5; 105; 205; 305; 605; 705), das sich entlang der genannten Längsachse erstreckt mit einem ersten Ende, das mit einem Scharnierelement (6; 106; 206; 306; 406; 506; 606; 706) zur Verbindung mit einem Frontabschnitt der Brille verbunden ist, und mit einem dem ersten Ende entgegengesetzten zweiten Ende, wobei die Brillenbügelvorrichtung dadurch **gekennzeichnet** ist, daß das genannte zweite Ende des Körpers konzentrisch drehbar mit dem zweiten Ende des röhrenartigen Elementes derart verbunden ist, daS der Körper um die genannte Längsachse gegenüber dem röhrenartigen Element drehbar ist, daß besagte Brillenbügelvorrichtung ferner elastische Rückstellmittel (17; 117; 217; 317; 517; 617; 717) umfaßt, die zwischen dem zweiten Ende des Körpers und dem zweiten Ende des röhrenartigen Elementes angeordnet sind, um den Körper in Abwesenheit von Gegenkräften in eine vorgegebenen Ruhelage bezüglich des röhrenartigen Elementes zu spannen, und daß besagte Brillenbügelvorrichtung ferner Mittel (9-12; 109-111; 214; 215; 321a, 321b; 421a, 421b; 508-511; 608-611; 708-711) zur Begrenzung der axialen Translation und axialen Rotation des Körpers gegenüber dem röhrenartigen Element umfaßt.

2. Brillenbügelvorrichtung nach Anspruch 1, dadurch **gekennzeichnet**, daß das zweite Ende des Körpers (2) mit einem zylindrischen Hohlraum (3), der in Richtung des röhrenartigen Elementes (5) geöffnet ist, und mit einer Aufnahme (8) versehen ist, die senkrecht zu genannter Längsachse ist, wobei das zweite Ende des röhrenartigen Elementes (5) das zweite Ende des Körpers (2) übergreift und mit einer Öffnung (11) versehen ist, die in Übereinstimmung mit der Aufnahme (8) angeordnet ist, daS die Öffnung (11) im wesentlichen parallelepipedisch ist und eine Längsachse hat, die gegenüber einer Senkrechten zur genannten Längsachse der Brillenbügelvorrichtung geringfügig geneigt ist, das die genannten Mittel zur Begrenzung der axialen Translation und der axialen Rotation einen Zapfen (9) umfassen, der einen im wesentlichen parallelepipedisch geformten Kopf (10) hat, dessen Breite und Länge geringfügig kleiner als die Breite bzw. Länge der Öffnung (11) ist, wobei besagter Zapfen (9) durch die Öffnung (11) in die Aufnahme (8) derart eingesetzt ist, daß der Kopf (10) des Zapfens (9) in die Öffnung (11) eingreift und in dieser bei relativer Drehung des Körpers (2) bezüglich des röhrenartigen Elementes (5) gleitend geführt wird, daß ferner ein stufenartiges Widerlager (12) innerhalb des röhrenartigen Elementes (5) vorgesehen ist, um die Vereinigung mit dem zweiten Ende des Körpers (2) zu begrenzen, wobei der Zapfen (9) eine konkave Seitenfläche besitzt, die innerhalb des Hohlraums (3) des zweiten Endes des Körpers (2) angeordnet ist, daß besagtes Scharnier (6) einen Nocken (16) definiert, der drehbar am ersten Ende des röhrenartigen Elementes (5) gelagert ist, wobei die elastischen Rückstellmittel eine zylindrische Schraubendruckfeder (17) umfassen, die sich entlang der Längsachse teilweise innerhalb des zylindrischen Hohlraumes (3) und teilweise innerhalb des röhrenartigen Elementes (5) erstreckt, daß eine erste Kugel (14) und eine zweite Kugel (15) vorgesehen sind, wobei die erste Kugel (14) innerhalb des Hohlraumes (3) angeordnet ist und zwischen dem ersten Ende der Feder (17) und der konkaven Seitenfläche des Zapfens (9) wirkt und wobei die zweite Kugel (15) in dem röhrenartigen Element (5) angeordnet ist und zwischen dem zweiten Ende der Feder (17) und einer auf dem Nocken (16) ausgebildeten gekrümmten Steuerfläche wirkt, und daß die Brillenbügelvorrichtung schließlich zur Ermöglichung der elastischen Überspreizung ein Anschlagelement umfaßt, das aus einem zylindrischen Stift (18) besteht, der innerhalb der Feder (17) angeordnet ist.

3.  Brillenbügelvorrichtung nach Anspruch 1, dadurch **gekennzeichnet**, daß das zweite Ende des Körpers (102) mit einem zylindrischen Hohlraum (103), der in Richtung des röhrenförmigen Elementes (105) geöffnet ist, und mit einer Aufnahme (108) versehen ist, die senkrecht zur genannten Längsachse ist, wobei das zweite Ende des röhrenartigen Elementes (105) das zweite Ende des Körpers (102) übergreift und mit einer Vielzahl von Öffnungen (11) versehen ist, deren eine in Übereinstimmung mit der Aufnahme (108) angeordnet ist, wobei jede der Öffnungen (11) im wesentlichen parallelepipedisch ist und eine Längsachse hat, die gegenüber einer Senkrechten zur genannten Längsachse der Brillenbügelvorrichtung geringfügig geneigt ist, daß die genannten Mittel zur Begrenzung der axialen Translation und der axialen Rotation einen Zapfen (109) umfassen, der ein Ende (110a) mit einem gegenüber einer Breite der Öffnungen (111) größeren Durchmesser und einen Kopf (110b) hat, der von dem Ende (110a) absteht und im wesentlichen parallelepipedische Form hat mit einer Breite und Länge, die geringfügig kleiner ist als die Breite bzw. Länge der Öffnungen (111), wobei der Zapfen (109) in die Aufnahme (108) derart eingeführt wird, daß das Ende (110a) innerhalb des röhrenartigen Elementes (105) angeordnet ist, und wobei der Kopf (110b) in eine der Öffnungen (111) eingreift und in dieser bei relativer Drehung des Körpers (102) gegenüber dem röhrenartigen Element (105) gleitend geführt wird, daß der Zapfen (109) eine Länge hat, die kleiner ist als eine entsprechende Länge der Aufnahme (108), was es gestattet, den Zapfen (109) durch vollständiges Eindrücken desselben in die Aufnahme (108) in eine gewünschte Öffnung (111) umzustecken, daß das röhrenartige Element (105) mit einem ersten Hohlraum (119, der mit dem Hohlraum (103) des zweiten Endes des Körpers (102) in Verbindung steht, und mit einem zweiten Hohlraum (120) versehen ist, der zum Scharnier (106) hin geöffnet und entgegengesetzt dazu geschlossen ist, wobei das Scharnier (106) einen Nocken bildet, der schwenkbar am ersten Ende des röhrenartigen Elementes (105) gelagert ist, daß in dem zweiten Hohlraum (120) eine Feder (117c) vorgesehen ist, die zwischen dem geschlossenen Ende des zweiten Hohlraumes (120) und einer ersten Kugel (115) wirkt, die an einer am Nocken ausgebildeten gekrümmten Steuerfläche angeordnet ist, daß besagte elastische Rückstellmittel eine linksgängige erste Schraubenfeder (117a), die sich entlang der Längsachse innerhalb des röhrenartigen Elementes (105) erstreckt und zwischen dem zweiten Ende des Körpers (102) und einem geschlossenen Ende des zweiten Hohlraumes (120) wirkt, sowie eine rechtsgängige zweite Schraubenfeder umfassen, die sich entlang der Längsachse teilweise innerhalb des Hohlraumes (103) und teilweise innerhalb des röhrenartigen Elementes erstreckt, wobei die zweite Schraubenfeder (117b) koaxial zu und innerhalb der ersten Schraubenfeder (117a) angeordnet ist, und daß eine zweite Kugel (114) vorgesehen ist, die innerhalb des Hohlraumes (103) angeordnet ist und zwischen einem ersten Ende der zweiten Schraubenfeder (117b) und dem Zapfen (109) wirkt, wobei die zweite Schraubenfeder (117b) ein zweites Ende hat, das sich an dem geschlossenen Ende des zweiten Hohlraums (120) abstützt.

4.  Brillenbügelvorrichtung nach Anspruch 1, dadurch **gekennzeichnet**, daß das zweite Ende (221a) des Körpers (202) eine ähnliche Form, aber einen größeren Durchmesser als der Körper (202) besitzt, wobei das erste Ende (221a) in das röhrenartige Element (20) eingesetzt wird, dessen erstes Ende mittels einer Stellschraube (222) mit einem Ende (212b) des Scharniers (206) verbunden ist, wobei das zweite Ende (221a) des Körpers (202) eine dem Scharnier (206) abgewandte flache ringförmige Grundfläche (223) bildet und das röhrenartige Element (205) einen dem Scharnier (206) zugewandten stufenförmigen Absatz (212) hat, daß die elastischen Rückstellmittel eine Schraubenfeder (217) umfassen, welche den Körper (202) umgibt, innerhalb des röhrenartigen Elementes (205) angeordnet ist und zwischen der flachen ringförmigen Grundfläche (223) und dem stufenförmigen Absatz (212) wirkt, wobei die Mittel zur Begrenzung der axialen Translation und der axialen Rotation mindestens zwei Kugeln (214, 215) umfassen, die einander entgegengesetzt in Sitzen (208, 208b) angeordnet sind, die in sich gegenüberliegende am zweiten Ende (221a) des Körpers (202) und am Ende (221b) des Scharniers (206) ausgebildeten Flächen vorgesehen sind, wodurch die Kugeln unter Federdruck der Feder (217) stehen, so daß die Kugeln (214, 215) bei voller Ausdehung der Schraubenfeder (217) Halbkontakt haben, und wobei eine Drehung des Körpers (202) den Vollkontakt der Kugeln (214, 215) bewirkt, wodurch die Feder (217) zusammengedrückt wird.

5. Brillenbügelvorrichtung nach Anspruch 1, dadurch **gekennzeichnet**, daß das zweite Ende (321a) des Körpers (302) eine ähnliche Form aber einen größeren Durchmesser als der Körper (302) besitzt, wobei das zweite Ende (321a) in das röhrenförmige Element (305) eingesetzt wird, dessen erstes Ende mittels einer Stellschraube (322) mit einem Ende (321b) des Scharniers (306) verbunden ist, wobei das zweite Ende (321a) des Körpers (302) eine dem Scharnier (306) abgewandte flache ringförmige Grundfläche (323) bildet und das röhrenförmige Element (305) einen dem Scharnier (306) zugewandten stufenförmigen Absatz (312) hat, daß die elastischen Rückstellmittel eine Schraubenfeder (317) umfassen, die den Körper (302) umgibt und innerhalb des röhrenartigen Elementes (305) angeordnet ist, und daß die Schraubenfeder (317) zwischen der flachen ringförmigen Grundfläche (323) und dem stufenartigen Absatz (312) wirkt, wobei die genannten Mittel zur Begrenzung der axialen Translation und der axialen Rotation eine V-förmige Keilnut, die am Ende (321b) des Scharniers (306) ausgebildet und dem Scharnier (306) abgewandt ist, sowie einen V-förmigen Keil umfassen, der am zweiten Ende (321a) des Körpers ausgebildet und dem Scharnier (306) zugewandt ist, wodurch die Keilnut und der Keil mittels der Schraubenfeder (317) durch Federdruck in wechselseitigen Eingriff gebracht werden.

6. Brillenbügelvorrichtung nach Anspruch 1, dadurch **gekennzeichnet**, daß das zweite Ende (421a) des Körpers (402) eine ähnliche Form, aber einen größeren Durchmesser als der Körper hat, wobei das zweite Ende (421a) in das röhrenförmige Element eingesetzt wird, dessen erstes Ende mittels einer Stellschraube mit einem Ende des Scharniers (406) verbunden ist, wobei das zweite Ende (421a) des Körpers eine dem Scharnier (406) abgewandte flache ringförmige Grundfläche bildet, daß das röhrenförmige Element einen dem Scharnier (406) zugewandten stufenförmigen Absatz hat, daß die elastischen Rückstellmittel eine Schraubenfeder umfassen, die den Körper umgibt, innerhalb des röhrenartigen Elementes angeordnet ist und zwischen der flachen ringförmigen Grundfläche und dem stufenförmigen Absatz wirkt, wobei die genannten Mittel zur Begrenzung der axialen Translation und der axialen Rotation ein Evolventenprofil, das am Ende (421b) des Scharniers (406) ausgebildet und dem Scharnier (406) abgewandt ist, und ein korrespondierendes Evolventenprofil umfassen, daß am zweiten Ende (421a) des Körpers ausgebildet und dem Scharnier (406) zugewandt ist, wodurch die Evolventenprofile mittels der Schraubenfeder durch Federdruck in wechselseitige Verbindung gebracht werden.

7. Brillenbügelvorrichtung nach Anspruch 1, dadurch **gekennzeichnet**, daß das zweite Ende des Körpers (502) mit einer sich über den Durchmesser erstreckenden Aussparung (503a) versehen ist, die zum röhrenartigen Körper (505) hin geöffnet ist, wobei das zweite Ende des röhrenartigen Elementes (505) das zweite Ende des Körpers (502) übergreift und mit einer Aussparung (503b) versehen ist, die identisch zu der sich über den Durchmesser erstreckenden Aussparung (503a) ist, daß die elastische Rückstellmittel eine Stahlklinge (517a) umfassen, die innerhalb des röhrenartigen Elementes (505) zwischen der diametral gerichteten Aussparung (503a) des zweiten Endes des Körpers (502) und der Aussparung (503) des röhrenartigen Elementes (505) angeordnet ist, daß der röhrenartige Körper (505) ferner mit einer Aufnahme (508), die bezüglich der Aussparung (503b) in Richtung des Scharniers (506) angeordnet und senkrecht zur Längsachse gerichtet ist, und mit einem Längshohlraum (527) versehen ist, der mit der Aufnahme (508) in Verbindung steht, daß das röhrenartige Element (505) mit einer Öffnung (511) versehen ist, die in Flucht mit der Aufnahme (508) angeordnet ist, daß die genannten Mittel zu Begrenzung der axialen Translation und der axialen Rotation einen Zapfen (509) umfassen, der in die Aufnahme (508) eingesetzt wird und einen über die Öffnung (511) herausragenden Kopf (510) besitzt, wobei der Zapfen (509) eine ringförmige Nut (525) hat, die als Aufnahme für das spitze Ende eines Stiftes (526) dient, der innerhalb des Längshohlraumes (627) angeordnet ist, wobei das spitze Ende des Stiftes (526) durch eine zylindrische Schraubenfeder (517b), die den Stift (526) umgibt, teilweise in der genannten Nut gehalten wird und wobei die Feder (517b) an dem dem spitzen Ende des Stiftes (526) entgegengesetzten Ende Kontakt mit einer Kugel (515) hat, die mit einer gekrümmten Nockenfläche (529) zusammenwirkt, die am Scharnier (506) ausgebildet ist.

8.  Brillenbügelvorrichtung nach Anspruch 1, dadurch **gekennzeichnet**, daß das röhrenartige Element (605) eine parallelepipedische Form mit im wesentlichen quadratischem oder rechteckigem Querschnitt besitzt, daß das erste Ende (631) des röhrenartigen Elementes (605) eine Längsfräsung (632) besitzt, die zwei im wesentlichen identische Flügel (633) definiert, die zum Scharnier (606) hin leicht abgerundet sind, daß die Flügel (633) längs einer Achse senkrecht zu genannter Längsachse mit Bohrungen (635) versehen sind, daß ein passend geformter Schieber (639) zwischen die Flügel (633) geschoben ist, der ein als Nockenende (643) ausgebildetes erstes Ende hat, das im wesentlichen parallelelepedische Form hat und eine Seitennase (644) bildet, die mit einem inneren Absatz (645) zusammenwirkt, der an einer Grundfläche der Fräsung (632) ausgebildet ist, daß das besagte erste Nockenende (643) auf der der den Bohrungen (635) der Flügel (633) entgegengesetzten Seite bezüglich des Scharniers (606) angeordnet ist, das ein Nockenende (646) besitzt, das mit besagter Nocke (643) zusammenwirkt und eine Bohrung (647) aufweist, um das Nockenende (646) mittels eines durch die Bohrung (647) und die Bohrung (635) gesteckten Stiftes (622) drehbar mit den Flügeln (633) zu verbinden, daß genannter Schieber (639) ein zweites Ende mit einer Fräsung (640) senkrecht zur Längsachse hat, daß der Körper als Drehstift (602) ausgebildet ist, der in eine Aufnahme einsetzbar ist, die im zweiten Ende (636) des röhrenartigen Elementes ausgebildet ist, daß die elastischen Rückstellmittel einen unter Federspannung stehenden Draht (617a) umfassen, der von dem Drehstift (602) abstehend in das röhrenartige Element (605) ragt, wobei der Draht (617a) mit einem Halbösenende (637) versehen ist, das in die Fräsung (640) des Schiebers (639) eingesetzt wird, und daß die genannten Mittel zur Begrenzung der axialen Translation und der axialen Rotation einen Zapfen (609) umfassen, der in eine Bohrung (611) eingesetzt wird, die in leicht von der Längsachse abweichender Lage im zweiten Ende (636) des röhrenartigen Elementes (605) vorgesehen ist, wobei der Zapfen (609) ferner in eine Aufnahme (608) eingesetzt ist, die an einer Seitenfläche (638) des Drehstiftes (602) ausgebildet ist, und wobei ferner eine den Draht (617a) umgebende zylindrische Schraubendruckfeder (617b) zwischen dem Drehstift (602) und dem die Fräsung (640) aufweisenden zweiten Ende des Schiebers (639) vorgesehen ist.

9.  Brillenbügelvorrichtung nach Anspruch 1, dadurch **gekennzeichnet**, daß das zweite Ende des Körpers als zylindrische Spindel (702) ausgebildet ist, die in Längsrichtung in eine Aufnahme von im wesentlichen parallelepipedischem Querschnitt des röhrenartigen Elementes (705) eingesetzt ist, daß die genannten elastischen Rückstellmittel einen unter Federspannung stehenden Draht (717a) umfassen, der von der zylindrischen Spindel (702) abstehend in die Aufnahme des röhrenartigen Elementes (705) ragt und in einer Öse (737) endet, deren Durchmesser etwas kleiner ist als eine innere Diagonale der Aufnahme des röhrenartigen Elementes (705) so daß sie in diese paßt, und daß die genannten Mittel zur Begrenzung der axialen Translation und der axialen Rotation der Spindel (702) bezüglich des röhrenartigen Elementes (705) einen Zapfen (709) umfassen, der durch eine Bohrung (711) eingefügt wird, die außermittig am röhrenartigen Element (705) vorgesehen ist und in eine Aufnahme (708) eingepaßt ist, welche in einer Seitenfläche der Spindel (702) vorgesehen ist, wobei das erste Ende des röhrenartigen Elementes (705) mit einem Ösenkopf (750) versehen ist, der drehbar mit dem Scharnierelement (706) verbunden ist.

**Revendications**

1.  Dispositif formant branche pour des lunettes, comprenant : un corps arrière (2;102;202;302;502;602;702) s'étendant le long d'un axe longitudinal prédéterminé et ayant une première extrémité à laquelle est reliée une partie arquée du dispositif formant branche destinée à être située derrière une oreille de l'utilisateur, et ayant une seconde extrémité opposée à ladite première extrémité de celui-ci ; un élément tubulaire avant (5;105;205; 305;605;705) s'étendant le long dudit axe longitudinal et ayant une première extrémité reliée à un élément d'articulation (6;106;206;306;406;506;606;706) pour la liaison à une partie frontale des lunettes, et ayant une seconde extrémité opposée à ladite première extrémité de celui-ci, ledit dispositif formant branche étant caractérisé en ce que ladite seconde extrémité dudit corps est reliée, en pouvant tourner, concentriquement à ladite seconde extrémité dudit élément tubulaire de façon que ledit corps peut tourner autour dudit axe longitudinal par rapport audit élément tubulaire, ledit dispositif formant branche comprenant de plus des moyens de rappel élastiques (17;117;217;317;517;617;717) interconnectés entre ladite seconde extrémité dudit corps et ladite seconde extrémité dudit élément tubulaire pour solliciter ledit corps, en l'absence de forces contraires, en une position de repos préétablie par rapport audit élément tubulaire, ledit dispositif formant branche comprenant de plus des moyens (9-12;109-111;214,215;321a,321b;421a,421b; 508-511;608-611; 708-711) pour limiter la translation axiale et la rotation axiale dudit corps par rapport audit élément tubulaire.

2. Dispositif selon la revendication 1, caractérisé en ce que ladite seconde extrémité dudit corps (2) est munie d'une cavité cylindrique (3) ouverte vers ledit élément tubulaire (5) et d'un siège (8) qui est perpendiculaire audit axe longitudinal, ladite seconde extrémité dudit élément tubulaire (5) se fondant avec ladite seconde extrémité dudit corps (2) et étant munie d'une ouverture (11) agencée en ligne avec ledit siège (8), ladite ouverture (11) étant sensiblement parallélépipédique et ayant un axe s'étendant longitudinalement qui est légèrement incliné par rapport à une perpendiculaire audit axe longitudinal dudit dispositif formant branche, lesdit moyens pour limiter la translation axiale et la rotation axiale comprenant une goupille (9) qui présente une tête (10) de forme généralement parallélépipédique, ayant une largeur et une longueur légèrement plus petites que ladite ouverture (11), ladite goupille (9) étant insérée à travers ladite ouverture (11) dans ledit siège (8) de sorte que ladite tête (10) de ladite goupille (9) est engagée et guidée, de façon coulissante, dans ladite ouverture (11) lors d'une rotation relative dudit corps (2) par rapport audit élément tubulaire (5), et, de plus, une butée en forme de gradin (12) étant prévue à l'intérieur dudit élément tubulaire (5) pour arrêter l'engagement avec ladite seconde extrémité dudit corps (2), ladite goupille (9) ayant une surface latérale concave qui est agencée à l'intérieur de ladite cavité (3) de ladite seconde extrémité dudit corps (2), ladite articulation (6) définissant une came (16) qui est pivotée vers ladite première extrémité dudit élément tubulaire (5), lesdits moyens de rappel élastiques comprenant un ressort hélicoïdal de compression cylindrique (17) s'étendant le long dudit axe longitudinal partiellement à l'intérieur de ladite cavité cylindrique (3) et partiellement à l'intérieur dudit élément tubulaire (S), et une première bille (14) et une seconde bille (15) sont prévues, ladite première bille (14) étant agencée à l'intérieur de ladite cavité (3) et interagissant entre une première extrémité dudit ressort (17) et ladite surface latérale concave de ladite goupille (9), ladite seconde bille (15) étant agencée dans ledit élément tubulaire (5) et interagissant entre une seconde extrémité dudit ressort (17) et une surface de came incurvée définie sur ladite came (16), et, enfin, de façon à permettre son écartement élastique, ledit dispositif formant branche comprenant de plus un élément de butée qui est constitué par une broche cylindrique (18) agencée à l'intérieur dudit ressort (17).

3. Dispositif selon la revendication 1, caractérisé en ce que ladite seconde extrémité dudit corps (102) est munie d'une cavité cylindrique (103) ouverte vers ledit élément tubulaire (105) et d'un siège (108) qui est perpendiculaire audit axe longitudinal, ladite seconde extrémité dudit élément tubulaire (105) se fondant avec ladite seconde extrémité dudit corps (102) et étant munie d'une pluralité d'ouvertures (111), dont une est agencée en ligne avec ledit siège (108), chaque dite ouverture (111) étant essentiellement parallélépipédique et ayant un axe s'étendant longitudinalement qui est légèrement incliné par rapport à une perpendiculaire audit axe longitudinal dudit dispositif formant branche, lesdits moyens pour limiter la translation axiale et la rotation axiale comprenant une goupille (109) qui présente une extrémité (110a) ayant un diamètre plus grand que la largeur desdites ouvertures (111) et une tête (110b) faisant saillie de ladite extrémité (110a) qui présente une forme généralement parallélépipédique, ayant une largeur et une longueur légèrement plus petites que lesdites ouvertures (111), ladite goupille (109) étant insérée dans ledit siège (108) de sorte que ladite extrémité (110a) est agencée à l'intérieur dudit élément tubulaire (105) et ladite tête (110b) est engagée et guidée, de façon coulissante, dans ladite ouverture (111) lors d'une rotation relative dudit corps (102) par rapport audit élément tubulaire (105), ladite goupille (109) ayant une longueur qui est plus petite que la longueur correspondante dudit siège (108) en permettant ainsi, en poussant ladite goupille (109) complètement dans ledit siège (108), le repositionnement de ladite goupille (109) dans une souhaitée desdites ouvertures (111), ledit élément tubulaire (105) étant muni d'une première cavité (119) en communication avec ladite cavité (103) de ladite seconde extrémité dudit corps (102) et d'une seconde cavité (120) ouverte vers ladite articulation (106) et fermée de façon opposée à celle-ci, ladite articulation (106) définissant une came qui est pivotée vers ladite première extrémité dudit élément tubulaire (105), un ressort (117c) étant prévu dans ladite seconde cavité (120) qui interagit entre l'extrémité fermée de ladite seconde cavité (120) et une première bille (115) agencée au niveau d'une surface de came incurvée définie sur ladite came, lesdits moyens de rappel élastiques comprenant un premier ressort hélicoïdal à gauche (117a) qui s'étend le long dudit axe longitudinal à l'intérieur dudit élément tubulaire (105) et qui interagit entre ladite seconde extrémité dudit corps (102) et une extrémité fermée de ladite seconde cavité (120), un second ressort hélicoïdal à droite (117b) qui s'étend le long dudit axe longitudinal partiellement à l'intérieur de ladite cavité (103) et partiellement à l'intérieur dudit élément tubulaire, ledit second ressort hélicoïdal (117b) étant agencé coaxialement audit premier ressort hélicoïdal (117a) et à l'intérieur de celui-ci, et une seconde bille (114) étant prévue, ladite seconde bille (114) étant agencée à l'intérieur de ladite cavité (103) et interagissant entre une première extrémité dudit second ressort hélicoïdal (117b) et ladite goupille (109), ledit second ressort hélicoidal (117b) ayant une seconde extrémité qui repose contre ladite extrémité fermée de ladite seconde cavité (120).

4.  Dispositif selon la revendication 1, caractérisé en ce que ladite seconde extrémité (221a) dudit corps (202) présente une forme semblable mais un diamètre plus grand que ledit corps (202), ladite seconde extrémité (221a) étant insérée dans ledit élément tubulaire (205) dont ladite première extrémité est reliée, au moyen d'une vis de fixation (222), à une extrémité (221b) de ladite articulation (206), ladite seconde extrémité (221a) dudit corps (202) définissant une base annulaire plate (223) opposée à ladite articulation (206), ledit élément tubulaire (205) définissant une discontinuité en forme de gradin (212) faisant face à ladite articulation (206), lesdits moyens de rappel élastiques comprenant un ressort hélicoïdal (217) agencé autour dudit corps (202) et à l'intérieur dudit élément tubulaire (205), et ledit ressort hélicoidal (217) interagissant entre ladite base annulaire plate (223) et ladite discontinuité en forme de gradin (212), lesdits moyens pour limiter la translation axiale et la rotation axiale comprenant au moins deux billes (214,215) agencées, de façon opposée, dans des sièges (208a,208b) prévus dans des surfaces en vis-à-vis définies sur ladite seconde extrémité (221a) dudit corps (202) et ladite extrémité (221b) de ladite articulation (206), lesdites billes étant ainsi chargées par ledit ressort (217), lesdites billes (214,215) étant en semi-contact pendant une extension complète dudit ressort hélicoïdal (214) et une rotation dudit corps (202) provoquant un contact complet desdites billes (214,215) pour ainsi comprimer ledit ressort (217).

5.  Dispositif selon la revendication 1, caractérisé en ce que ladite seconde extrémité (321a) dudit corps (302) présente une forme semblable mais un plus grand diamètre que ledit corps (302), ladite seconde extrémité (321a) étant insérée dans ledit élément tubulaire (305) dont ladite première extrémité est reliée, au moyen d'une vis de fixation (322), à une extrémité (321b) de ladite articulation (306), ladite seconde extrémité (321a) dudit corps (302) définissant une base annulaire plate (323) opposée à ladite articulation (306), ledit élément tubulaire (305) définissant une discontinuité en forme de gradin (312) faisant face à ladite articulation (306), lesdits moyens de rappel élastiques comprenant un ressort hélicoïdal (317) agencé autour dudit corps (302) et à l'intérieur dudit élément tubulaire (305), et ledit ressort hélicoidal (317) interagissant entre ladite base annulaire plate (323) et ladite discontinuité en forme de gradin (312), lesdits moyens pour limiter la translation axiale et la rotation axiale comprenant un coin femelle en forme de V, défini sur ladite extrémité (321b) de ladite articulation (306) et opposé à ladite articulation (306), et un coin mâle en forme V défini sur ladite seconde extrémité (321a) dudit corps et faisant face à ladite articulation (306), lesdits coins mâle et femelle étant chargés en contact d'engagement mutuel par ledit ressort hélicoidal (317).

6.  Dispositif selon la revendication 1, caractérisé en ce que ladite seconde extrémité (421a) dudit corps (402) présente une forme semblable mais un plus grand diamètre que ledit corps, ladite seconde extrémité (421a) étant insérée dans ledit élément tubulaire dont ladite première extrémité est reliée, au moyen d'une vis de fixation, à une extrémité de ladite articulation (406), ladite seconde extrémité (421a) dudit corps définissant une base annulaire plate opposée à ladite articulation (406), ledit élément tubulaire définissant une discontinuité en forme de gradin faisant face à ladite articulation (406), lesdits moyens de rappel élastiques comprenant un ressort hélicoïdal agencé autour dudit corps et à l'intérieur dudit élément tubulaire, et ledit ressort hélicoïdal interagissant entre ladite base annulaire plate et ladite discontinuité en forme de gradin, lesdits moyens pour limiter la translation axiale et la rotation axiale comprenant un profil en spirale défini sur ladite extrémité (421b) de ladite articulation (406) et opposé à ladite articulation (406), et un profil en spirale correspondant défini sur ladite seconde extrémité (421a) dudit corps et faisant face à ladite articulation (406), lesdits profils en spirale étant ainsi chargés en contact d'engagement mutuel par ledit ressort hélicoïdal.

7. Dispositif selon la revendication 1, caractérisé en ce ladite seconde extrémité dudit corps (502) est munie d'une cavité diamétrale (503a) ouverte vers ledit corps tubulaire (505), ladite seconde extrémité dudit élément tubulaire (505) se fondant avec ladite seconde extrémité du corps (502) et étant munie d'une cavité (503b) qui est identique à ladite cavité diamétrale (503a), lesdits moyens de rappel élastiques comprenant une lame en acier (517a) agencée à l'intérieur dudit élément tubulaire (505) entre ladite cavité diamétrale (503a) de ladite seconde extrémité dudit corps (502) et ladite cavité (503b) dudit élément tubulaire (505), ledit corps tubulaire (505) étant encore muni, agencé vers ladite articulation (506) par rapport à ladite cavité (503b), d'un siège (508) qui est perpendiculaire audit axe longitudinal et d'une cavité longitudinale (527) en communication avec ledit siège (508), ledit élément tubulaire (505) étant muni d'une ouverture (511) agencée en ligne avec ledit siège (508), lesdits moyens pour limiter la translation axiale et la rotation axiale comprenant une goupille (509) qui est insérée dans ledit siège (508) et qui présente une tête faisant saillie vers l'extérieur (510) de ladite ouverture (511), ladite goupille (509) ayant une rainure annulaire (525) qui agit comme siège pour une extrémité pointue d'une broche (526) reçue à l'intérieur de ladite cavité longitudinale (527), ladite extrémité pointue de ladite broche (526) étant maintenue partiellement à l'intérieur de ladite rainure par un ressort hélicoidal cylindrique (517b) agencé autour de ladite broche (526), ledit ressort (517b) étant en contact à une extrémité opposée à ladite extrémité pointue de ladite broche (526) avec une bille (515) qui coopère avec une surface de came incurvée (529) définie sur ladite articulation (506).

8. Dispositif selon la revendication 1, caractérisé en ce que ledit élément tubulaire (605) présente une forme parallélélipédique ayant une section tranversale sensiblement carrée ou rectangulaire, ladite première extrémité (631) dudit élément tubulaire (605) ayant un fraisage longitudinal (632) qui définit deux branches sensiblement identiques (633) légèrement chanfreinées vers ladite articulation (606), lesdites branches (633) étant munies de trous (635) le long d'un axe perpendiculaire audit axe longitudinal, un coulisseau de forme correspondante (639) étant inséré entre lesdites branches (633), ledit coulisseau (639) ayant une première extrémité qui est une extrémité de came (643) ayant une forme sensiblement parallélépipédique définissant une saillie latérale (644) qui interagit avec un gradin interne (645) défini à la base dudit fraisage (632), ladite première extrémité de came (643) étant agencée sur le côté opposé desdits trous (635) desdites branches (633) par rapport à ladite articulation (606) qui présente une extrémité de came (646) interagissant avec ladite came (643) et définissant un trou (647) pour faire pivoter ladite extrémité de came (646) vers lesdites branches (633) au moyen d'une broche (622) insérée à travers ledit trou (647) et lesdits trous (635), ledit coulisseau (639) ayant une seconde extrémité avec un fraisage (640) défini perpendiculairement audit axe longitudinal, ledit corps définissant une broche rotative (602) qui peut être insérée dans un siège défini dans la seconde extrémité (636) dudit élément tubulaire, lesdits moyens de rappel élastiques comprenant un fil métallique chargé par ressort (617a) faisant saillie de ladite broche pivotante (602) dans ledit élément tubulaire (605), ledit fil métallique (617a) ayant une extrémité recourbée (637) qui est insérée dans ledit fraisage (640) dudit coulisseau (639), lesdits moyens pour pour limiter la translation axiale et la rotation axiale comprenant une goupille (609) insérée dans un trou (611) prévue en une position légèrement déviée dudit axe longitudinal dans ladite seconde extrémité (636) dudit élément tubulaire (605), ladite goupille (609) étant de plus reçue dans un siège (608) défini sur une surface latérale (638) de ladite broche rotative (602), un ressort de compression hélicoïdal cylindrique (617b) étant par ailleurs prévu autour dudit fil métallique (617a) entre ladite broche rotative (602) et ladite seconde extrémité ayant ledit fraisage (640) dudit coulisseau (639).

9. Dispositif selon la revendication 1, caractérisé en ce que ladite seconde extrémité dudit corps définit un pivot cylindrique (702) inséré longitudinalement dans un siège ayant une section transversale sensiblement parallélépipédique dudit élément tubulaire (705), lesdits moyens de rappel élastiques comprenant un fil métallique chargé par ressort (717a) faisant saillie dudit pivot cylindrique (702) dans ledit siège dudit élément tubulaire (705) et s'achevant en un oeillet (737) ayant un diamètre légèrement plus petit qu'une diagonale interne dudit siège dudit élément tubulaire (705) de façon à s'y adapter, lesdits moyens pour limiter la translation axiale et la rotation axiale dudit pivot (702) par rapport audit élément tubulaire (705) comprenant une goupille (709) reçue à travers un trou (717) prévu de façon décentrée dans ledit élément tubulaire (705) et reçue dans un siège (708) prévu sur une surface latérale dudit pivot (702), ladite première extrémité dudit élément tubulaire (705) étant munie d'une tête à oeillet (750) reliée de façon pivotante audit élément d'articulation (706).

Fig.3

Fig.2

Fig.1

Fig.4

Fig.5

Fig.6

EP 0 207 190 B1

221b

215

Fig.7

223  214  221b  206

202  221a  215  Fig.8

301

305  317  321b

322

302  312  321a  Fig.9

321b

Fig.10

323  321a  321b  306

302  Fig.11

421b  406

402  421a  Fig.12

19

Fig. 13

Fig. 14

Fig. 15

Fig. 16

EP 0 207 190 B1

Fig. 17

Fig. 18

Fig. 19

617a

602 609

605 *Fig.20*

617a 602

638

605 *Fig.21*

706

711

750

705 *Fig.22*

709

702 717a

737

704 708

701

702 737

*Fig.24*

706

737

XXIV

717a

*Fig.23*

750

705

701 709

702

4

*Fig.25*

604 605

617b 642 639 606

601 *Fig.26*

643 646